# EUROPÄISCHE PATENTSCHRIFT

(11) **EP 3 111 176 B1**
(45) Veröffentlichungstag und Bekanntmachung des Hinweises auf die Patenterteilung: **01.03.2023**
(21) Anmeldenummer: 15701948.0
(22) Anmeldetag: 20.01.2015
(51) Int. Cl.: G01J 5/00, G01J 5/08

(54) **INFRAROT-BEWEGUNGSMELDER**
INFRARED MOTION DETECTOR
DÉTECTEUR DE MOUVEMENT INFRAROUGE

(30) Priorität: 28.02.2014 DE 102014002686
(43) Veröffentlichungstag der Anmeldung: 04.01.2017
(73) Patentinhaber: ABB Schweiz AG, 5400 Baden (CH)
(72) Erfinder: LISSON, Werner, 58093 Hagen (DE); KEMPER, Jürgen, 59425 Unna (DE); BLOMBERG, Lothar, 59757 Arnsberg (DE); DE JAGER, Dirk Petrus Gijsbertus, NL-6824 EH Amhem (NL); SCHRAGE, Ortwin, 47906 Kempen (DE)
(74) Vertreter: Wesch, Arno
(86) Internationale Anmeldenummer: PCT/EP2015/050970
(87) Internationale Veröffentlichungsnummer: WO 2015/128114

(56) Entgegenhaltungen:
- EP-A1- 1 148 455
- EP-A1- 1 398 742
- EP-A2- 2 634 880
- DE-U1-202012 101 356

## Beschreibung

Die Erfindung bezieht sich auf einen Infrarot-Bewegungsmelder mit mindestens einer von außen sichtbaren Linsenanordnung nach Anspruch 1 .

Aus der EP 1 398 742 A1 ist ein Passiv-Infrarot-Bewegungsmelder bekannt, der einen Schirm aufweist, der so gestaltet ist, dass die Erfassung jeweiliger Infrarotstrahlung aus Erfassungsbereichen gegeneinander abgeschirmt ist.

Infrarot-Bewegungsmelder, bei denen über eine von außen sichtbare Linse von Personen ausgehende Wärmestrahlung fokussiert und auf innenliegende Passiv-Infrarot-Sensoren gelenkt wird, sind allgemein bekannt und beispielsweise in der EP 1 148 455 B1 beschrieben. Die dabei an den Sensoren entstehende Ausgangsspannung wird über eine Auswerteelektronik in ein Schaltsignal gewandelt und beispielsweise zum Schalten einer Außenbeleuchtung oder einer Raumbeleuchtung genutzt.

Bekannte Bewegungsmelder, im folgenden auch Präsenzmelder genannt, weisen üblicherweise kalottenförmige Linsen auf, die aus dem die Linse umschließenden Gehäuse nach unten herausragen, so dass eine ungehinderte Erfassung der Wärmestrahlung möglich ist, die den Passiv-Infrarot-Sensoren zugeführt wird.

Die Präsenz- und Bewegungsmelder benötigen auch eine Information über die Umgebungshelligkeit, da eine Schaltaktion gegebenenfalls nur bei einem Unterschreiten einer bestimmten Lichtschwelle erfolgen soll. Dazu sind entsprechende Umgebungslicht-Sensoren in den Bewegungsmelder integriert, wobei das Licht entweder über den Anteil, der über die Linse einstreut oder über einen eigens dafür vorgesehenen Lichtleitstab, auch als optische Kalotte bekannt, dem Lichtsensor zugeführt und entsprechend ausgewertet wird.

Optional werden auch ein (Aktiv-) Infrarot-Empfänger und eine Signal-LED in das Gehäuse des Präsenzmelders integriert, um über eine Infrarot (IR)- Fernbedienung bestimmte Aktionen, wie das Ein- und Ausschalten des Lichtes, auszulösen bzw. um Statusinformationen sichtbar nach außen zu übertragen. Auch hierbei werden je nach Ausführung die Signale (IR- Signal eingehend bzw. LED-Lichtsignal ausgehend) über die Linse oder über eigene IR- bzw. Lichtleitstäbe geführt.

In den bekannten Anordnungen, die Kalotten oder Lichtleitstäbe verwenden, sind diese im Randbereich des Gehäuses, welches die herausragende Linse umfasst, angeordnet.

Den herkömmlichen Anordnungen, in denen die Signale für die Erfassung der Umgebungshelligkeit, der Erfassung von IR-Fernbedienungssignalen und die Ausgabe von LED-Lichtsignalen über den Linsenkörper geführt werden, haften insbesondere folgende Nachteile an:
- Bei der Verwendung transparenter Linsen besteht eine eingeschränkte IR-Fernbedienbarkeit, die durch Transmissionsverluste der Linse in dem betreffenden Wellenlängenbereich bedingt ist. Auch ist ein diffuses LED-Lichtsignal am Tage nicht gut erkennbar.
- Bei der Verwendung eingefärbter Linsen sind eine Erfassung der Umgebungshelligkeit und eine erkennbare Ausgabe eines LED-Lichtsignales über den Linsenkörper nur unzureichend oder gar nicht gegeben.

Werden die Signale für die Erfassung der Umgebungshelligkeit, die Erfassung von IR-Fernbedienungssignalen und die Ausgabe der LED-Lichtsignale über Lichtleiter im linsenumfassenden Randbereich des Gehäuses geführt, bedingt der aus dem Gehäuse herausragende Linsenkörper eine optische Abschattung und somit eine eingeschränkte Erfassung der Umgebungshelligkeit, der IR-Fernbedienbarkeit und der Erkennung des LED-Lichtsignals.

Der Erfindung liegt daher die Aufgabe zugrunde, einen Infrarot- Bewegungsmelder anzugeben, welcher vorab genannte Nachteile des Standes der Technik überwindet und der insbesondere eine Verbesserung der Erfassung der Umgebungshelligkeit, der IR-Fernbedienbarkeit und Erkennung eines Lichtsignals ermöglicht.

Diese Aufgabe wird durch einen Infrarot-Bewegungsmelder gelöst, der die im Anspruch 1 angegebenen Merkmale aufweist. Vorteilhafte Ausgestaltungen sind in weiteren Ansprüchen angegeben.

Der erfindungsgemäße Infrarot- Bewegungsmelder umfasst ein Gehäuse- oder Sockelteil, welches eine Leiterplatte mit wenigstens vier Passiv-IR-Sensoren, IR-Empfänger, Helligkeitssensor sowie weitere elektronische Bauteile, eine Spiegelanordnung sowie eine rechteckförmige Linsenanordnung aufnimmt und vom Abdeckteil abgedeckt ist. Vorzugsweise ist das Abdeckteil auf dem Sockelteil mittels einer Rastverbindung eingerastet.

In den Eckbereichen der rechteckförmigen Linsenanordnung sind vier kalottenförmige oder vier kalotten- und kegelstumpfförmige Linsen mit jeweils mehreren Linsensegmenten für die Bewegungserfassung angeordnet. Die Linsen der Linsenanordnung können als beliebig geformte Ausschnitte aus Fresnellinsen ausgeführt sein.

Erfindungsgemäß bildet das Abdeckteil einen mittig angeordneten Kunststoffsteg, welcher wenigstens zwei Öffnungen aufweist, in die transparente Kappenteile eingefügt sind. Unter den Kappenteilen befinden sich Lichtkanäle - die optional mit Lichtleitern bestückbar sind - , welche sich über IR-Empfänger und Helligkeitssensor befinden und mit diesen zusammenwirken. Die Erfassung von Umgebungshelligkeit, Fernbedienungssignalen und die Ausgabe der vom Bewegungsmelder bereitgestellten Lichtsignale, vorzugsweise LED-Lichtsignale, erfolgt über den mittigen in die Linsenanordnung eingreifenden aus einem Kunststoff gebildeten Steg, der dazu mit den betreffenden Lichtkanälen bzw. Lichtleitern zusammenwirkt. Durch das Einbringen der Lichtleiter in die Ebene der am tiefsten herausragenden Linsenfläche ist eine symmetrische und uneingeschränkte Erfassung und Ausgabe der beschriebenen Signale gegeben.

Die rechteckförmige Linsenanordnung ist aus zwei sich gegenüberliegenden kalottenförmigen oder kegelstumpf- und kalottenartigen Multilinsenteilen gebildet, die jeweils zwei Linsen mit mehreren Linsensegmenten aufweisen. Zwischen den Multilinsenteilen ist ein als

Aussparung ausgeführter Mittenbereich vorgesehen, welcher den Steg des Abdeckteils aufnimmt.

In einer bevorzugten Ausführungsform ist das Abdeckteil mit mehreren, vorzugsweise vier, Halterippen ausgestattet, die das Abdeckteil im Sockelteil halten. Die Halterippen greifen dazu in am Abdeckteil vorgesehene Haltetaschen ein. Optional sind am Abdeckteil Zentrierrippen für eine exakte Positionierung des Abdeckteils zum Sockelteil vorgesehen, die in entsprechende Zentrieraussparung des Sockelteils eingreifen.

Die Spiegelanordnung, die sich unter der Linsenanordnung befindet bzw. von dieser überdeckt wird, ist zur Erhöhung der optischen Auflösung der Linsenanordnung vorgesehen. Die Wirkflächen der Spiegelanordnung und die jeweilig zugehörigen Passiv-IR-Sensoren sind so zueinander angeordnet, dass die Wirkflächen der Spiegelanordnung Spiegelbilder der zugehörigen IR-Sensoren liefern. Weiterhin sind die Wirkflächen der Spiegelanordnung mit einer hochwertigen Beschichtung versehen, um einen möglichst hohen Reflexionsgrad zu erzielen.

In einer bevorzugten Ausführungsform weist die Spiegelanodnung Stützflächen auf, welche die darüber angeordnete Linsenanordnung rückseitig abstützen und stabilisieren. Weiterhin bildet die Spiegelanordnung eine Aufnahmevorrichtung für einen Programmierstößel sowie die Lichtkanäle für Helligkeitssensor und IR-Empfänger.

Der Programmierstößel wirkt mit einer auf der Leiterplatte angeordneten Programmiertaste des Bewegungsmelders zusammen und ist dafür vorgesehen, den Bewegungsmelder in einen Programmiermodus zu versetzen, optional auch über eine IR-Fernbedienung.

Anhand der in den Zeichnungen dargestellten Ausführungsbeispiele sollen die Erfindung, weitere Ausführungsformen und weitere Vorteile näher beschrieben werden.

Es zeigen:
- **Fig. 1**: eine beispielhafte perspektivische "Explosionsansicht" des erfindungsgemäßen Bewegungsmelders,
- **Fig. 2**: eine perspektivische Sicht auf eine erste Ausführungsform der Linsenanordnung,
- **Fig. 3**: eine perspektivische Sicht auf eine zweite Ausführungsform der Linsenanordnung,
- **Fig. 4**: eine Schnittansicht auf ein Ausführungsbeispiel des erfindungsgemäßen des Bewegungsmelders,
- **Fig. 5**: eine Draufsicht auf ein Ausführungsbeispiel des erfindungsgemäßen Bewegungsmelders,
- **Fig. 6**: eine beispielhafte Ausführung der Abdeckung des Sockelteils mittels einer Rastverbindung zwischen dem Sockelteil und dem Abdeckteil,
- **Fig. 7**: eine beispielhafte Ausführungsform zur Befestigung des erfindungsgemäßen Bewegungsmelders,
- **Fig. 8**: eine weitere beispielhafte Ausführungsform zur Befestigung des erfindungsgemäßen Bewegungsmelders.

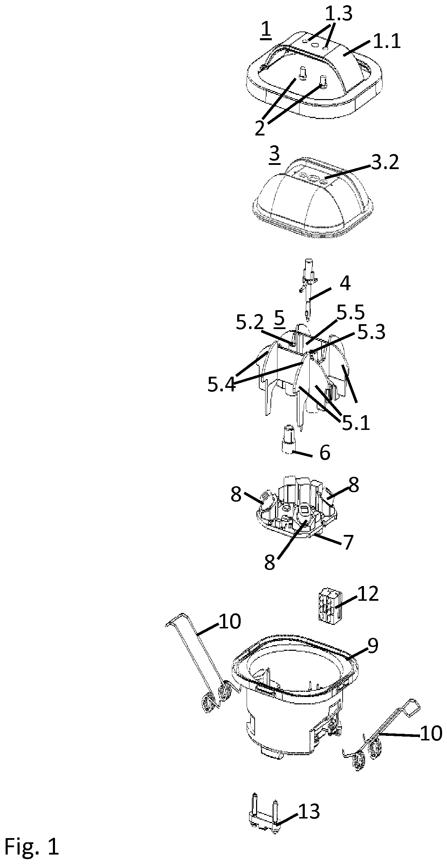

Die **Figur** 1 zeigt eine beispielhafte perspektivische "Explosionsansicht" des erfindungsgemäßen Bewegungsmelders, welcher hauptsächlich aus einem Abdeckteil 1, einer Linsenanordnung 3, einer Spiegelanordnung 5, einer Leiterplatte 7 und einem Sockelteil 9 zusammengesetzt ist.

Das Abdeckteil 1 ist mit einem mittig angeordnetem Kunststoffsteg 1.1 ausgestattet, welcher auf eine Aussparung 3.2 der Linsenanordnung 3 aufsetzbar ist.

Der Kunststoffsteg 1.1 weist Öffnungen 1.3 auf, in dem transparente Kappen 2 einbringbar sind. Unter den transparenten Kappen 2 sind Lichtkanäle 5.2, 5.3 geführt, die optional Lichtleiter aufnehmen können, wobei ein Durchtauchen der Lichtleiter durch die Linsenanordnung 3 geometrisch in einem Bereich, in dem keine Bewegungserfassung erforderlich ist, erfolgt.

Unter der Linsenanordnung 3 befindet sich die Spiegelanordnung 5, deren primäre Aufgabe in der Erhöhung der optischen Auflösung des optischen Systems liegt. Die Wirkflächen 5.1 der Spiegelanordnung werden exakt zu vier in den Eckbereichen der Linsenanordnung 3 befindlichen Passiv-IR-Sensoren 8 positioniert, so dass die Infrarotstrahlung, die von einem beweglichen Körper (Person) gesendet wird, sehr präzise auf die Passiv-IR-Sensoren 8 weitergeleitet wird.

Die Passiv-IR-Sensoren 8 sind mit einem IR-Empfänger, einem Helligkeitssensor und weiteren elektronischen Bauelementen auf der Leiterplatte 7 angeordnet. Eine weitere Funktion der Spiegelanordnung 5 beruht auf der Stabilisierung der Linsenanordnung 3. Da üblicherweise dünnwandigen Linsen der Vorzug gegeben wird, stützt die Spiegelanordnung 5 die Linsen der Linsenanordnung 3 rückseitig mit ihren Stützflächen 5.4 sicher ab, um so ein unbeabsichtigtes Eindrücken der Linsenanordnung 3 zu verhindern, beispielsweise bei der Installation des Bewegungsmelders in eine Hohldecke, auch als abgehängte Decke bekannt.

Darüber hinaus bildet die Spiegelanordnung 5 in ihrer Mitte eine Aufnahme 5.5 für einen Programmierstößel 4 sowie für die Lichtkanäle 5.2, 5.3 zur optionalen Aufnahme der Lichtleiter.

Der Lichtkanal 5.2, welcher mit dem IR-Empfänger zusammenwirkt, ist mit einer Kappe 6 bis auf die Leiterplatte 7 verlängerbar, so dass der IR-Empfänger von der Kappe 6 vollkommen umschlossen ist. Somit werden vom IR-Empfänger nur solche Signale empfangen, die durch den Lichtkanal 5.2 durchgehen. Der IR-Empfänger hat somit eine sehr enge Empfangscharakteristik und der Bewegungsmelder kann in vorteilhafter Weise gezielt mit einer Fernbedienung anvisiert werden, wodurch ein unbeabsichtigtes Ansprechen benachbarter Präsenzmelder nahezu ausgeschlossen ist.

Zur Installation des Bewegungsmelders, beispielsweise in die Hohldecke oder in eine Aufputzdose, werden eine Leitungs-Anschlussklemme 12, eine Leitungs-Zugentlastung 13 sowie Montagefedern 10 benötigt und als Zubehör zur Verfügung gestellt.

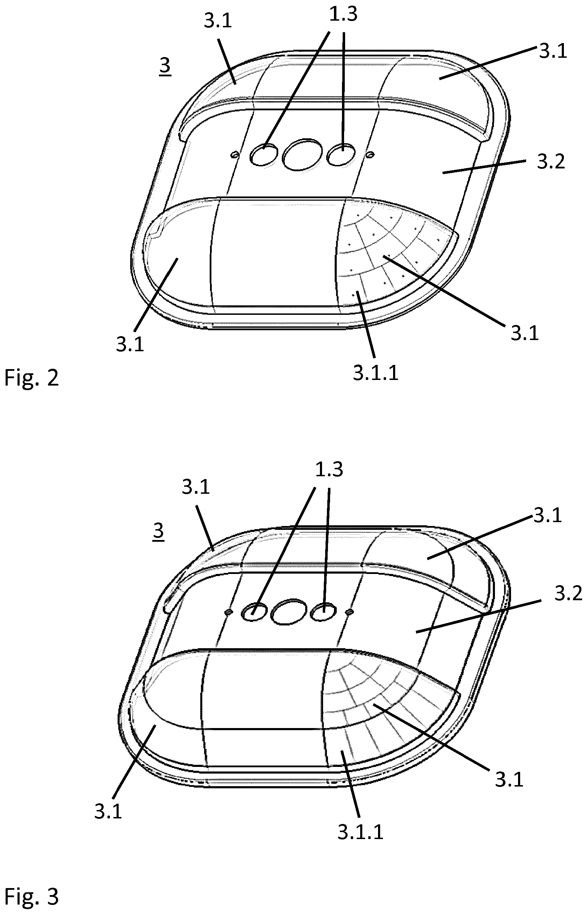

In den **Figuren** 2 und 3 sind zwei beispielhafte Ausführungsformen der Linsenanordnung 3, im Folgenden auch Multilinse genannt, des erfindungsgemäßen Bewegungsmelders dargestellt, welche lediglich die äußeren Abmessungen und den Erfassungsbereich des Bewegungsmelders beeinflussen. In beiden Ausführungsformen weist die Multilinse 3 eine flache Form auf, in deren Eckbereich sich vier Linsen 3.1 sowie vier entsprechende Passiv-IR-Sensoren 8 für die Bewegungserfassung befinden.

Die Aussparung 3.2, auch Mittenbereich genannt, der Multilinse 3 ist leicht abgesetzt, damit der Steg 1.1 des Abdeckteils 1 darin abtaucht. Die analogen Öffnungen zu den Öffnungen im Kunststoffsteg 1.1 befinden sich auch sind auch im Mittenbereich 3.2 der Linsenanordnung 3.

Die Multilinse 3 gemäß der ersten Ausführungsform (siehe **Figur** 2) hat die Form einer 1/4-Kugelkalotte mit 12 Linsensegmenten 3.1.1.

Die Multilinse 3 gemäß der zweiten Ausführungsform (siehe **Figur** 3), hat die Form einer 1/4-Kugelkalotte mit 1/4-Kegelstumpf mit 18 Linsensegmenten 3.1.1. Dadurch ist der Bewegungsmelder gemäß **Figur** 3 insgesamt etwas höher und breiter aufgebaut, wodurch sich dessen Erfassungsbereich vergrößert.

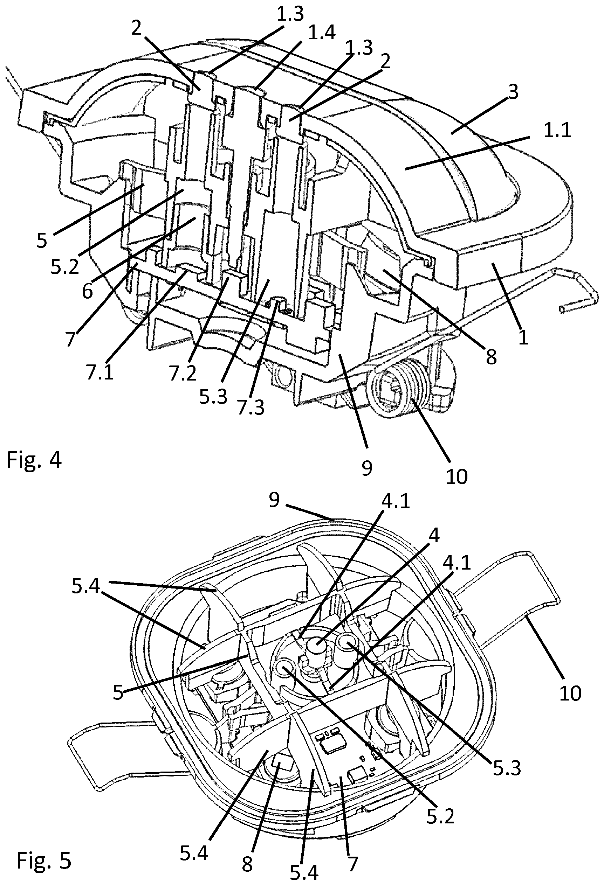

**Figur** 4 zeigt eine Schnittansicht des Bewegungsmelders mit dem Sockelteil 9, welches die Leiterplatte 7 mit den vier Passiv-IR-Sensoren 8, dem IR-Empfänger 7.1, dem Helligkeitssensor 7.3 sowie einer Programmiertaste 7.2, die Spiegelanordnung 5 und die rechteckförmige Multilinse 3 aufnimmt, die mit dem Abdeckteil 1 abgedeckt sind. Das Sockelteil 9 ist mittels zweier Montagefedern 10 in einer Hohldeckenöffnung befestigbar.

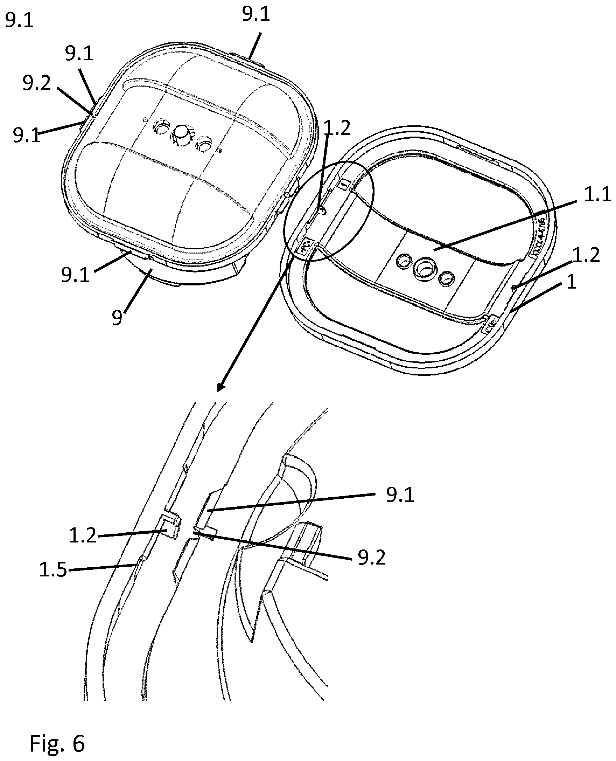

Mittig über der Linsenanordnung 3 ist der Kunststoffsteg 1.1 des Abdeckteils 1 angeordnet. Das Abdeckteil 1 ist nicht, wie üblich mit dem Sockelteil 9 verschraubt, sondern auf dem Sockelteil 9 aufgerastet. Dies reduziert die Fertigungs-Durchlaufzeiten und damit die Herstellkosten des Bewegungsmelders. Des Weiteren hat diese Lösung den Vorteil, dass das Abdeckteil 1 an vier Stellen im Sockelteil 9 gehalten wird. Dies ist der **Figur** 6 entnehmbar.

Im mittleren Bereich im Steg 1.1 des Abdeckteils 1 sind zwei Öffnungen 1.3 gezeigt. Unter dem Steg 1.1 sind in die Öffnungen 1.3 je eine transparente Kappe 2 für IR-Empfänger 7.1 und für Helligkeitssensor 7.3 angebracht. Unmittelbar unter den zwei Kappen 2 befinden sich Lichtkanäle 5.2 und 5.3 für den IR-Empfänger 7.1 und für den Helligkeitssensor 7.3.

Die Lichtkanäle 5.2 und 5.3 sind feste Bestandteile der Spiegelanordnung 5. Die Länge des Lichtkanals 5.2 für den IR-Empfänger 7.1 ist etwas kürzer als die Länge des Lichtkanals 5.3 für den Helligkeitssensor 7.3. Dadurch lässt sich eine Präsenzmelder-Variante mit einer breiten Empfangscharakteristik (Aktiv-IR) realisieren, da vom IR-Empfänger 7.1 zusätzlich Signale empfangen werden können, welche die Multilinse 3 durchdringen.

Der Lichtkanal 5.2 ist mit einer Kappe 6 bis auf die Leiterplatte 7 verlängert, so dass der IR-Empfänger 7.1 von der Kappe 6 vollkommen umschlossen ist. Somit werden vom IR-Empfänger 7.1 nur die Signale empfangen, die durch den Lichtkanal 5.2 hindurchgehen.

Der Lichtkanal 5.3 ist so ausgebildet, dass er den Helligkeitssensor 7.3 vollkommen umschließt und das Eintreten von Streulicht durch die Multilinse 3 auf den Helligkeitssensor 7.3 nicht zulässt. Dadurch erfolgt eine gewünschte Einschränkung des Sichtfeldes der Helligkeitserfassung.

In der Mitte des Bewegungsmelders zwischen den Öffnungen 1.3 befindet sich eine weitere Öffnung 1.4 für den Programmierstößel 4, mittels dem die Programmiertaste 7.2 betätigbar ist und nach der Betätigung durch die zwei in der **Figur** 5 gezeigten Federarme 4.1 in die Ausgangsposition zurückkehrt.

**Figur** 5 zeigt eine Draufsicht auf ein Ausführungsbeispiel des erfindungsgemäßen Bewegungsmelders vor der Montage des Abdeckteiles 1 und der Multilinse 3.

Zur Stabilisierung der Multilinse 3 werden die 2x4 Stützflächen 5.4 der Spiegelanordnung 5 genutzt. Darüber hinaus bildet die Spiegelanordnung 5, wie bereits erwähnt, die Aufnahme für den Programmierstößel 4 sowie die Lichtkanäle 5.2, 5.3.

**Figur** 6 zeigt beispielhaft, wie die Abdeckung des Sockelteils 9 mittels einer Rastverbindung zwischen dem Sockelteil 9 und dem Abdeckteil 1 ausgeführt ist. Am Sockelteil 9 befinden sich hierzu vier Halterippen 9.1, die in entsprechende m Abdeckteil 1 vorgesehene Haltetaschen 1.5 eingreifen. Für eine exakte Positionierung des Abdeckteils 1 zum Sockelteil 9 sind am Abdeckteil 1, vorzugsweise zwei, Zentrierrippen 1.2 angebracht, die in entsprechende Zentrieraussparungen 9.2 des Sockelteils 9 eingreifen.

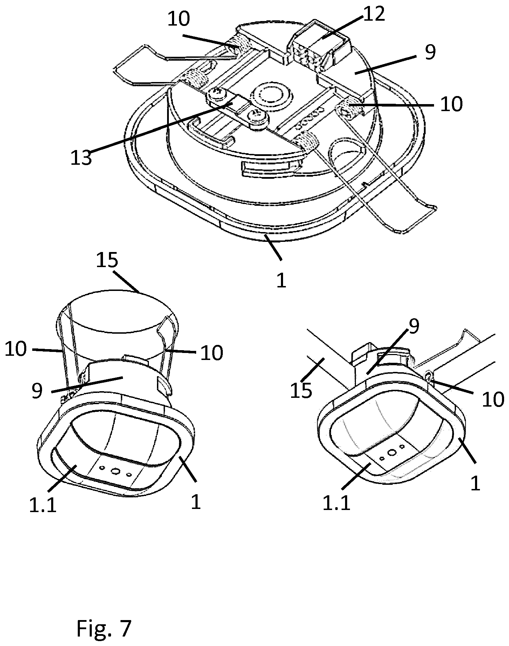

Die **Figur** 7 zeigt eine Sicht auf die Rückseite des erfindungsgemäßen Bewegungsmelders, der in eine Hohldecke 15 mittels der beiden Montagefedern 10 in eine Hohldeckenöffnung eingesetzt wird. Damit der Bewegungsmelder nach seiner Installation ein möglichst flaches Erscheinungsbild abgibt, taucht ein wesentlicher Teil des Bewegungsmelders ähnlich wie ein Unterputzeinsatz in die Wand bzw. Decke 15 ein. Hierfür wird eine entsprechende Aussparung/Bohrung in der Wand 15 genutzt, die den unteren kreisförmig ausgestalteten Bereich des Sockelteiles 9 aufnimmt, nachdem die aus der Decke 15 herausragenden Leitungen mittels der Leitungsanschlussklemme 12 und der Zugentlastung 13 mit dem Bewegungsmelder verbunden wurden.

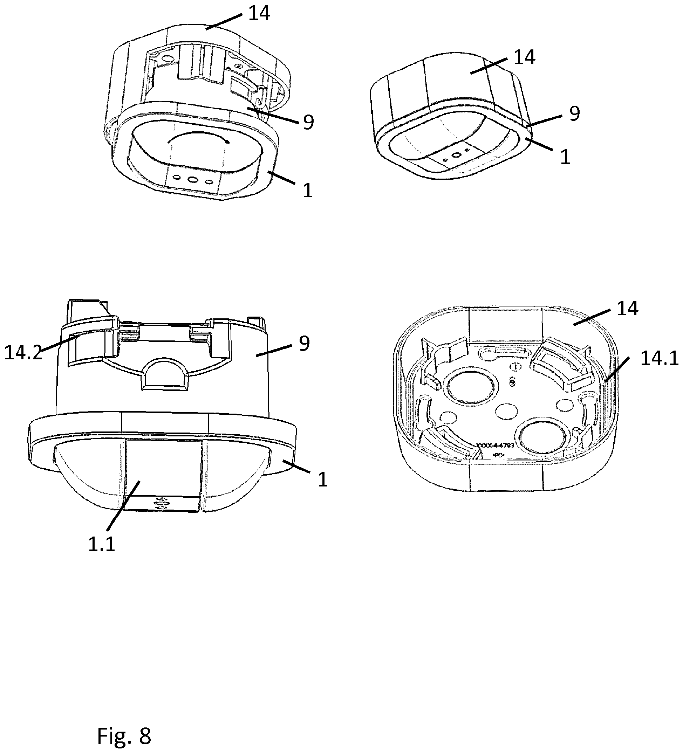

In einer Massivdecke ist diese Aussparung/Bohrung nicht vorhanden und auch nachträglich nicht einbringbar. **Figur** 8 zeigt dazu eine erfindungsgemäße Lösung zur Installation des Bewegungsmelders auf einer Massivdecke 15. Dazu wird zuerst die Aufputzdose 14 an der Decke befestigt, beispielsweise festgeschraubt. Nach dem Anschließen der Leitung wird der Bewegungsmelder mit einer Viertelumdrehung gemäß dem Bajonettverschluss-Prinzip mittels in der Aufputzdose 14 vorgesehener Haltelaschen 14.1 und zugehöriger im Sockelteil 9 des Bewegungsmelders vorgesehener Haltezungen 14.2 auf die Aufputzdose 14 montiert. Hier sind die Montagefedern 10 nicht mehr erforderlich.

Die installierte Aufputzdose 14 ist neben der Aufnahme des Bewegungsmelders in vorteilhafter Weise auch als Stauraum für notwendige Leitungen vorgesehen und kann zudem als weiteres Designteil fungieren.

### Bezugszeichenliste

- 1: Abdeckteil
- 1.1: Steg
- 1.2: Zentrierrippe
- 1.3: Öffnung
- 1.4: weitere Öffnung
- 1.5: Haltetasche
- 2: transparente Kappe
- 3: Linsenanordnung, Multilinse
- 3.1: Linse
- 3.1.1: Linsensegment
- 3.2: Aussparung, Mittenbereich
- 4: Programmierstößel
- 4.1: Federarm
- 5: Spiegelanordnung
- 5.1: Wirkfläche der Spiegelanordnung
- 5.2: Lichtleiter, Lichtkanal für Helligkeitssensor
- 5.3: Lichtleiter, Lichtkanal für IR-Empfänger
- 5.4: Stützfläche
- 6: Kappe
- 5.5: Aufnahme für Programmierstößel
- 7: Leiterplatte
- 7.1: Empfänger
- 7.2: Programmiertaste
- 7.3: Helligkeitssensor
- 8: Passiv-IR-Sensoren
- 9: Sockelteil
- 9.1: Halterippe
- 9.2: Zentrieraussparungen
- 10: Montagefeder
- 12: Leitungs-Anschlussklemme
- 13: Leitungs-Zugentlastung
- 14: Aufputzdose
- 14.1: Haltelasche
- 14.2: Haltezunge
- 15: Hohldecke, abgehängte Decke

## Patentansprüche

1. Passiv-Infrarot-Bewegungsmelder, umfassend ein Abdeckteil (1), ein Sockelteil (9), eine Spiegelanordnung (5) mit Wirkflächen (5.1), eine rechteckförmige Linsenanordnung (3) und eine Leiterplatte (7), wobei das Sockelteil (9) die Leiterplatte (7), auf der vier Passiv-IR-Sensoren (8), ein IR-Empfänger (7.1) zur Erfassung von IR-Fernbedienungssignalen, ein Helligkeitssensor (7.3 zur Erfassung von Umgebungshelligkeit, sowie weitere elektronische-Bauteile angeordnet sind, die Spiegelanordnung (5) und die rechteckförmige Linsenanordnung (3) aufnimmt, wobei das Sockelteil (9) vom Abdeckteil (1) abgedeckt ist, wobei
- in den Eckbereichen der rechteckförmigen Linsenanordnung (3) vier kalottenförmige Linsen (3.1) mit jeweils mehreren Linsensegmenten (3.1.1) für die Bewegungserfassung oder vier kalotten- und kegelstumpfförmige Linsen (3.1) mit jeweils mehreren Linsensegmenten (3.1.1) für die Bewegungserfassung angeordnet sind,
- wobei die unter der Linsenanordnung (3) angeordnete Spiegelanordnung (5) zur Erhöhung der optischen Auflösung der Linsenanordnung (3) vorgesehen ist,
- wobei die Wirkflächen (5.1) der Spiegelanordnung (5) und die diesen jeweilig zugeordneten Passiv-IR-Sensoren (8) so zueinander angeordnet sind, dass die Wirkflächen (5.1) der Spiegelanordnung (5) Spiegelbilder der zugeordneten Passiv-IR-Sensoren (8) liefern und wobei die Wirkflächen (5.1) der Spiegelanordnung (5) mit einer reflektierenden Beschichtung versehen sind, wobei
- das über der Linsenanordnung (3) befindliche Abdeckteil (1) einen mittig angeordneten Kunststoffsteg (1.1) mit wenigstens zwei Öffnungen (1.3) aufweist, in die transparente Kappenteile (2) eingefügt sind, und
- wobei unter den Kappenteilen (2) Lichtkanäle (5.2, 5.3) zur Aufnahme von Lichtleitern angeordnet sind, welche mit dem darunterliegenden IR-Empfänger (7.1 ) und Helligkeitssensor (7.3) zusammenwirken,
- wobei die Erfassung von Umgebungshelligkeit und IR-Fernbedienungssignalen durch den Kunststoffsteg (1.1) erfolgt, der dazu mit den betreffenden Lichtkanälen (5.2, 5.3) zusammenwirkt.

2. Passiv-Infrarot-Bewegungsmelder nach Anspruch 1, **dadurch gekennzeichnet, dass** die rechteckförmige Linsenanordnung (3) aus zwei sich gegenüberliegenden kegelstumpf- und kalottenartigen oder aus zwei sich gegenüberliegenden kalottenartigen Multilinsenteilen gebildet ist, die jeweils zwei Linsen (3.1) mit mehreren Linsensegmenten (3.1.1) aufweisen und zwischen den Multilinsenteilen eine Aussparung (3.2) vorgesehen ist, welche den Kunststoffsteg (1.1) des Abdeckteiles (1) aufnimmt.

3. Passiv-Infrarot-Bewegungsmelder nach einem der vorstehenden Ansprüche,
**dadurch gekennzeichnet, dass** die Linsenanordnung (3) die Form einer 1/4-Kugelkalotte mit 12 Linsensegmenten (3.1.1) hat.

4. Passiv-Infrarot-Bewegungsmelder nach einem der Ansprüche 1 oder 2,
**dadurch gekennzeichnet, dass** die Linsenanordnung (3) die Form einer 1/4-Kugelkalotte mit einem 1/4-Kegelstumpf mit 18 Linsensegmenten (3.1.1) hat.

5. Passiv-Infrarot-Bewegungsmelder nach einem der vorstehenden Ansprüche,
**dadurch gekennzeichnet, dass** das Abdeckteil (1) mittels einer Rastverbindung am Sockelteil (9) befestigt ist.

6. Passiv-Infrarot-Bewegungsmelder nach einem der vorherigen Ansprüche,
**dadurch gekennzeichnet, dass** am Sockelteil (9) mehrere, vorzugsweise vier, Halterippen (9.1) angeordnet sind, um das Abdeckteil (1) im Sockelteil (9) zu halten.

7. Passiv-Infrarot-Bewegungsmelder nach Anspruch 6, **dadurch gekennzeichnet, dass** das Abdeckteil (1) Haltetaschen (1.5) aufweist, in welche die Halterippen (9.1) eingreifen.

8. Passiv-Infrarot-Bewegungsmelder nach Anspruch 5 bis 7, **dadurch gekennzeichnet, dass** das Abdeckteil (1) Zentrierrippen (1.2) für eine exakte Positionierung zum Sockelteil (9) aufweist, die in eine entsprechende Zentrieraussparung (9.2) des Sockelteiles (9) eingreifen.

9. Passiv-Infrarot-Bewegungsmelder nach einem der vorstehenden Ansprüche,
**dadurch gekennzeichnet, dass** die Spiegelanordnung (5) Stützflächen (5.4) aufweist, welche die Linsenanordnung (3) rückseitig abstützen und die Linsenanordnung (3) stabilisieren.

10. Passiv-Infrarot-Bewegungsmelder nach einem der vorstehenden Ansprüche,
**dadurch gekennzeichnet, dass** die Spiegelanordnung (5) eine Aufnahmevorrichtung (5.5) für einen Programmierstößel (4) sowie den Lichtkanal (5.2) und (5.3) bildet.

11. Passiv-Infrarot-Bewegungsmelder nach Anspruch 10, **dadurch gekennzeichnet, dass** eine Betätigung des Programmierstößels (4) den Bewegungsmelder in einen Programmiermodus versetzt.

12. Passiv-Infrarot-Bewegungsmelder nach Anspruch 10 oder 11, **dadurch gekennzeichnet, dass** der Programmierstößel (4) nach der Betätigung durch, vorzugsweise zwei, vorgesehene Federarme (4.1) in seine Ausgangsposition zurückkehrt.

13. Passiv-Infrarot-Bewegungsmelder nach einem der vorstehenden Ansprüche, **dadurch gekennzeichnet, dass** die Länge des Lichtkanals (5.2) für den IR-Empfänger (7.1) kürzer ist als die Länge des Lichtkanals (5.3) für den Helligkeitssensor (7.3) und der Lichtkanal (5.3) für den Helligkeitssensor (7.3) so ausgebildet ist, dass dieser Lichtkanal (5.3) den Helligkeitssensor (7.3) vollkommen umschließt und das Eintreten von Streulicht durch die Linsenanordnung (3) auf den Helligkeitssensor (7.3) verhindert.

14. Passiv-Infrarot-Bewegungsmelder nach Anspruch 13, **dadurch gekennzeichnet, dass** die Länge des Lichtkanals (5.2) für den IR-Empfänger (7.1) durch eine Kappe (6) bis auf die Leiterplatte (7) verlängert ist, so dass der IR-Empfänger (7.1) von der Kappe (6) vollkommen umschlossen ist.

15. Passiv-Infrarot-Bewegungsmelder nach einem der vorstehenden Ansprüche, **dadurch gekennzeichnet, dass** das Sockelteil (9) mittels Montagefedern (10) in eine Aussparung oder Hohldeckenöffnung oder in eine Aufputzdose (14), die an einer Massivdecke (15) befestigt ist, vorzugsweise mittels eines Bajonettverschluss-Prinzipes, einsetzbar ist.

## Claims

1. Passive infrared motion detector comprising a cover part (1), a base part (9), a mirror arrangement (5) having active surfaces (5.1), a rectangular lens arrangement (3) and a printed circuit board (7), the base part (9) accommodating the printed circuit board (7), on which four passive IR sensors (8), an IR receiver (7.1) for registering IR remote control signals, a brightness sensor (7.3) for registering ambient brightness and further electronic components are arranged, the mirror arrangement (5) and the rectangular lens arrangement (3), the base part (9) being covered by the cover part (1), with
- four spherical cap-shaped lenses (3.1) each having a plurality of lens segments (3.1.1) for motion detection or four spherical cap- and truncated coneshaped lenses (3.1) each having a plurality of lens segments (3.1.1) for motion detection being arranged in the corner regions of the rectangular lens arrangement (3),
- the mirror arrangement (5) arranged below the lens arrangement (3) being provided to increase the optical resolution of the lens arrangement (3),
- the active surfaces (5.1) of the mirror arrangement (5) and the passive IR sensors (8) assigned to these in each case being arranged with respect to one another such that the active surfaces (5.1) of the mirror arrangement (5) supply mirror images of the assigned passive IR sensors (8), and the active surfaces (5.1) of the mirror arrangement (5) being provided with a reflective coating,
- the cover part (1) located above the lens arrangement (3) having a centrally arranged plastic web (1.1) with at least two openings (1.3), into which transparent cap parts (2) are incorporated, and
- light channels (5.2, 5.3) for accommodating light guides being arranged under the cap parts (2), the said light guides interacting with the IR receiver (7.1) and brightness sensor (7.3) located underneath,
- the registration of ambient brightness and IR remote control signals being implemented through the plastic web (1.1), which to this end interacts with the relevant light channels (5.2, 5.3).

2. Passive infrared motion detector according to Claim 1, **characterized in that** the rectangular lens arrangement (3) is formed from two opposing truncated cone- and spherical cap-like multi-lens parts or from two opposing spherical cap-like multi-lens parts, which each have two lenses (3.1) with a plurality of lens segments (3.1.1), and a recess (3.2) accommodating the plastic web (1.1) of the cover part (1) is provided between the multi-lens parts.

3. Passive infrared motion detector according to either of the preceding claims, **characterized in that** the lens arrangement (3) has the form of a 1/4 spherical cap with 12 lens segments (3.1.1).

4. Passive infrared motion detector according to either of Claims 1 and 2, **characterized in that** the lens arrangement (3) has the form of a 1/4 spherical cap having a 1/4 truncated cone with 18 lens segments (3.1.1).

5. Passive infrared motion detector according to any one of the preceding claims, **characterized in that** the cover part (1) is fastened to the base part (9) by means of a latching connection.

6. Passive infrared motion detector according to any one of the preceding claims, **characterized in that** a plurality of holding ribs (9.1), preferably four holding ribs (9.1), are arranged on the base part (9) for holding the cover part (1) in the base part (9).

7. Passive infrared motion detector according to Claim 6, **characterized in that** the cover part (1) has holding pockets (1.5), in which the holding ribs (9.1) engage.

8. Passive infrared motion detector according to Claims 5 to 7, **characterized in that** the cover part (1) has centring ribs (1.2) for exact positioning in relation to the base part (9), the centring ribs engaging in a corresponding centring recess (9.2) of the base part (9).

9. Passive infrared motion detector according to any one of the preceding claims, **characterized in that** the mirror arrangement (5) has support surfaces (5.4) which support the lens arrangement (3) on the rear and stabilize the lens arrangement (3).

10. Passive infrared motion detector according to any one of the preceding claims, **characterized in that** the mirror arrangement (5) forms a receptacle device (5.5) for a programming plunger (4) and the light channel (5.2) and (5.3).

11. Passive infrared motion detector according to Claim 10, **characterized in that** an actuation of the programming plunger (4) puts the motion detector into a programming mode.

12. Passive infrared motion detector according to Claim 10 or 11, **characterized in that** the programming plunger (4) returns to its initial position after the actuation by way of preferably two provided spring arms (4.1).

13. Passive infrared motion detector according to any one of the preceding claims, **characterized in that** the length of the light channel (5.2) for the IR receiver (7.1) is shorter than the length of the light channel (5.3) for the brightness sensor (7.3), and the light channel (5.3) for the brightness sensor (7.3) is formed so that this light channel (5.3) completely encloses the brightness sensor (7.3) and prevents the entrance of stray light on the brightness sensor (7.3) through the lens arrangement (3).

14. Passive infrared motion detector according to Claim 13, **characterized in that** the length of the light channel (5.2) for the IR receiver (7.1) is extended up to the printed circuit board (7) by way of a cap (6) so that the IR receiver (7.1) is fully enclosed by the cap (6).

15. Passive infrared motion detector according to any one of the preceding claims, **characterized in that** the base part (9) is insertable by means of mounting springs (10) into a recess or false ceiling opening or into a surface box (14) fastened to a solid ceiling (15), preferably by means of a bayonet fitting principle.

## Revendications

1. Détecteur de mouvement à infrarouge passif, comprenant une partie de recouvrement (1), une partie de socle (9), un arrangement de miroirs (5) ayant des surfaces actives (5.1), un arrangement de lentilles (3) rectangulaire et un circuit imprimé (7), la partie de socle (9) accueillant le circuit imprimé (7), sur lequel sont disposés quatre capteurs IR passifs (8), un récepteur IR (7.1) destiné à acquérir des signaux de télécommande IR, un capteur de luminosité (7.3) destiné à détecter la luminosité ambiante, ainsi que d'autres composants électroniques, l'arrangement de miroirs (5) et l'arrangement de lentilles (3) rectangulaire, la partie de socle (9) étant recouverte par la partie de recouvrement (1),
- quatre lentilles en forme de calotte (3.1), ayant respectivement plusieurs segments de lentille (3.1.1) pour la détection de mouvement, ou quatre lentilles en forme de calotte et tronquées (3.1), ayant respectivement plusieurs segments de lentille (3.1.1) pour la détection de mouvement, étant disposées dans les zones de coin de l'arrangement de lentilles (3) rectangulaire,
- l'arrangement de miroirs (5) disposé sous l'arrangement de lentilles (3) étant prévu pour augmenter la résolution optique de l'arrangement de lentilles (3),
- les surfaces actives (5.1) de l'arrangement de miroirs (5) et les capteurs IR passifs (8) qui leur sont respectivement associés étant disposés les uns par rapport aux autres de telle sorte que les surfaces actives (5.1) de l'arrangement de miroirs (5) délivrent des images en miroir des capteurs IR passifs (8) associé et les surfaces actives (5.1) de l'arrangement de miroirs (5) étant pourvues d'un revêtement réfléchissant,
- la partie de recouvrement (1) qui se trouve au-dessus de l'arrangement de lentilles (3) possédant une traverse en plastique (1.1) disposée au centre et pourvue d'au moins deux ouvertures (1.3) dans lesquelles sont insérées des parties formant capuchon (2) transparentes, et
- des canaux à lumière (5.2, 5.3) étant disposés sous les parties formant capuchon (2) pour accueillir des fibres optiques, lesquelles coopèrent avec le récepteur IR (7.1) et le capteur de luminosité (7.3) qui se trouvent en dessous,
- la détection de la luminosité ambiante et l'acquisition de signaux de télécommande IR s'effectuant par le biais de la traverse en plastique (1.1), laquelle coopère à cet effet avec les canaux à lumière (5.2, 5.3) concernés.

2. Détecteur de mouvement à infrarouge passif selon la revendication 1, **caractérisé en ce que** l'arrangement de lentilles (3) rectangulaire est formé à partir de deux parties à lentilles multiples tronquées et en forme de calotte se faisant mutuellement face ou à partir de deux parties à lentilles multiples en forme de calotte se faisant mutuellement face, lesquelles possèdent respectivement deux lentilles (3.1) ayant plusieurs segments de lentille (3.1.1) et un évidement (3.2) étant présent entre les parties à lentilles multiples, lequel accueille la traverse en plastique (1.1) de la partie de recouvrement (1).

3. Détecteur de mouvement à infrarouge passif selon l'une des revendications précédentes, **caractérisé en ce que** l'arrangement de lentilles (3) possède la forme d'un ¼ de calotte sphérique avec 12 segments de lentille (3.1.1).

4. Détecteur de mouvement à infrarouge passif selon l'une des revendications 1 ou 2, **caractérisé en ce que** l'arrangement de lentilles (3) possède la forme d'un ¼ de calotte sphérique avec un ¼ de cône tronqué ayant 18 segments de lentille (3.1.1).

5. Détecteur de mouvement à infrarouge passif selon l'une des revendications précédentes, **caractérisé en ce que** la partie de recouvrement (1) est fixée à la partie de socle (9) au moyen d'un assemblage à encliquetage.

6. Détecteur de mouvement à infrarouge passif selon l'une des revendications précédentes, **caractérisé en ce que** plusieurs, de préférence quatre, nervures de maintien (9.1) sont disposées au niveau de la partie de socle (9) afin de maintenir la partie de recouvrement (1) dans la partie de socle (9).

7. Détecteur de mouvement à infrarouge passif selon la revendication 6, **caractérisé en ce que** la partie de recouvrement (1) possède des poches de maintien (1.5) dans lesquelles viennent en prise les nervures de maintien (9.1).

8. Détecteur de mouvement à infrarouge passif selon l'une des revendications 5 à 7, **caractérisé en ce que** la partie de recouvrement (1) possède des nervures de centrage (1.2) pour un positionnement exact par rapport à la partie de socle (9), lesquelles viennent en prise dans un évidement de centrage (9.2) correspondant de la partie de socle (9).

9. Détecteur de mouvement à infrarouge passif selon l'une des revendications précédentes, **caractérisé en ce que** l'arrangement de miroirs (5) possède des surfaces d'appui (5.4), qui soutiennent l'arrangement de lentilles (3) du côté arrière et stabilisent l'arrangement de lentilles (3).

10. Détecteur de mouvement à infrarouge passif selon l'une des revendications précédentes, **caractérisé en ce que** l'arrangement de miroirs (5) possède un dispositif d'accueil (5.5) pour un poussoir de programmation (4) et forme aussi les canaux à lumière (5.2) et (5.3).

11. Détecteur de mouvement à infrarouge passif selon la revendication 10, **caractérisé en ce que** l'actionnement du poussoir de programmation (4) amène le détecteur de mouvement dans un mode de programmation.

12. Détecteur de mouvement à infrarouge passif selon la revendication 10 ou 11, **caractérisé en ce que** le poussoir de programmation (4), après l'actionnement, retourne dans sa position initiale par de préférence deux bras de ressort (4.1) présents.

13. Détecteur de mouvement à infrarouge passif selon l'une des revendications précédentes, **caractérisé en ce que** la longueur du canal à lumière (5.2) pour le récepteur IR (7.1) est plus courte que la longueur du canal à lumière (5.3) pour le capteur de luminosité (7.3) et le canal à lumière (5.3) pour le capteur de luminosité (7.3) est configuré de telle sorte que ce canal à lumière (5.3) entoure totalement le capteur de luminosité (7.3) et empêche la pénétration de lumière parasite à travers l'arrangement de lentilles (3) sur le capteur de luminosité (7.3).

14. Détecteur de mouvement à infrarouge passif selon la revendication 13, **caractérisé en ce que** la longueur du canal à lumière (5.2) pour le récepteur IR (7.1) est prolongée jusqu'au circuit imprimé (7) par un capuchon (6), de sorte que le récepteur IR (7.1) est totalement entouré par le capuchon (6).

15. Détecteur de mouvement à infrarouge passif selon l'une des revendications précédentes, **caractérisé en ce que** la partie de socle (9) peut être introduite au moyen de ressorts de montage (10) dans un évidement ou une ouverture de faux plafond ou dans une boîte à montage apparent (14), qui est fixée à un plafond massif (15), de préférence au moyen d'un principe de fermeture à baïonnette.
